# FASCICULE DE BREVET EUROPEEN

(11) **EP 4 255 806 B1**
(45) Date de publication et mention de la délivrance du brevet: **26.02.2025**
(21) Numéro de dépôt: 21807103.3
(22) Date de dépôt: 10.11.2021
(51) Int. Cl.: B64D 11/06, B60R 7/02

(54) **UNITE DE SIEGE**
SITZEINHEIT
SEAT UNIT

(30) Priorité: 03.12.2020 FR 2012576
(43) Date de publication de la demande: 11.10.2023
(73) Titulaire: Safran Seats, 78370 Plaisir (FR)
(72) Inventeur: BONNEFOY, Bastien, 77550 MOISSY-CRAMAYEL (FR)
(74) Mandataire: Marconnet, Sébastien
(86) Numéro de dépôt international: PCT/EP2021/081268
(87) Numéro de publication internationale: WO 2022/117299

(56) Documents cités:
- WO-A1-2010/081156
- FR-A1- 3 011 783
- US-A1- 2010 066 113
- US-A1- 2018 127 099

## Description

La présente invention concerne une unité de siège comprenant une console munie d'un plateau mobile de fermeture d'un logement de stockage. L'invention trouve une application particulièrement avantageuse avec les unités de sièges de type "classe affaires" et "première classe".

De façon connue en soi, une telle unité de siège comporte un siège associé à une console latérale munie de rangements et à une coque s'étendant au moins en partie autour du siège de manière à délimiter un espace semi-clos autour du passager. Une telle configuration permet de garantir l'intimité du passager assis sur le siège.

Le siège offre au passager différentes positions de confort, d'une position "assise" jusqu'à une position "allongée", dans laquelle le siège définit un plan de couchage sensiblement horizontal pour que le passager puisse s'allonger. Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions. Le siège est généralement constitué notamment du dossier et d'une assise et est susceptible de comporter un repose-jambes et/ou un repose-pieds, pouvant être fixes ou liés à une cinématique du siège.

Les rangements clos situés sur la console du siège peuvent être disposés suivant un agencement vertical et être accessibles via une porte de stockage mobile autour d'un axe vertical. Ces rangements peuvent également être disposés suivant un agencement horizontal et être accessibles via une trappe mobile autour d'un axe horizontal. Les parois mobiles des rangements n'ont toutefois pas d'autre fonction que celle d'autoriser l'accès ou fermer ces rangements.

Le document FR3011783 décrit un dispositif de support équipant une face arrière d'un dossier rabattable d'un premier siège de véhicule. Ce dispositif comprend i) une pièce de maintien solidarisée fixement à la face arrière du dossier et comportant deux rainures sensiblement parallèles à la direction longitudinale du véhicule, ii) une plaque propre à supporter des objets une fois le dossier rabattu et montée à rotation sur un axe et iii) une traverse propre à coulisser dans les rainures et à laquelle est couplé l'axe afin de permettre un entraînement en rotation et/ou un coulissement suivant la direction longitudinale de la plaque entre une position rangée, dans laquelle elle est placée intégralement sur la face arrière, et des positions déployées dans lesquelles elle déborde sur un côté longitudinal et/ou un côté transversal supérieur du dossier.

L'invention est décrite dans la revendication indépendante 1. La revendication divulgue une unité de siège comprenant une console, un accoudoir et une paroi supérieure, ladite console comportant:
- un logement de stockage délimitant un volume interne à l'intérieur duquel peuvent être posés des objets,
- ledit logement de stockage comportant une ouverture débouchant vers l'extérieur dudit logement de stockage suivant une direction verticale, et
- un plateau mobile, mobile entre une position de fermeture dans laquelle le plateau mobile ferme l'ouverture du logement de stockage et une position d'ouverture dans laquelle ledit plateau mobile est dégagé de l'ouverture du logement de stockage pour permettre d'accéder au volume interne dudit logement de stockage,
- ledit plateau mobile s'étendant dans un plan horizontal dans la position de fermeture et dans la position d'ouverture, ledit plateau mobile étant apte à être maintenu dans ledit plan horizontal lors d'un déplacement dudit plateau mobile de la position de fermeture à la position d'ouverture et inversement,
caractérisée en ce que le logement de stockage s'étend verticalement entre l'accoudoir et la paroi supérieure formant une surface de table.

L'invention permet ainsi, grâce au plateau mobile de fermeture du logement de stockage maintenu dans un plan l'horizontal, d'utiliser ce plateau mobile comme un support sur lequel le passager pourra poser des objets tels qu'un verre, un dispositif électronique portatif (téléphone mobile, tablette), ou tout autre objet, quelle que soit la position du plateau mobile. L'invention permet en outre d'accéder au logement de stockage sans avoir à retirer l'objet posé sur le plateau mobile.

Selon une réalisation de l'invention, dans la position de fermeture et dans la position d'ouverture, le plateau mobile se situe dans un même plan horizontal que la paroi supérieure formant la surface de table.

Selon une réalisation de l'invention, dans la position de fermeture, le plateau mobile se situe dans un prolongement de la paroi supérieure formant la surface de table.

Selon une réalisation de l'invention, le plateau est mobile en rotation d'une position à une autre par l'intermédiaire d'une liaison pivot d'axe vertical.

Selon une réalisation de l'invention, la liaison pivot est formée par une tige verticale coopérant avec une cavité de forme correspondante réalisée dans une portion cylindrique solidaire du plateau.

Selon une réalisation de l'invention, la console comporte un dispositif de limitation d'un déplacement angulaire du plateau mobile.

Selon une réalisation de l'invention, le dispositif de limitation d'un déplacement angulaire du plateau mobile comporte un ergot lié mécaniquement au plateau coopérant avec une rainure en forme d'arc de cercle ménagée dans un épaulement de la tige de sorte qu'au moins une extrémité de la rainure constitue une butée de déplacement pour l'ergot de façon à limiter un déplacement angulaire du plateau mobile lors de son passage de la position de fermeture à la position d'ouverture.

Selon une réalisation de l'invention, la console comporte une source lumineuse apte à assurer un éclairage du volume interne du logement de stockage.

Selon une réalisation de l'invention, le plateau mobile comporte un dispositif de maintien d'un dispositif électronique portatif.

L'invention a également pour objet une unité de siège comportant un siège et une console telle que précédemment définie.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une unité de siège comportant une console selon l'invention munie d'un logement de stockage associé à un plateau mobile en position de fermeture;
[Fig. 2] La figure 2 est une vue en perspective détaillée d'un logement de stockage d'une console selon l'invention munie d'un plateau mobile en position d'ouverture;
[Fig. 3] La figure 3 est une vue en perspective de dessus d'un logement de stockage d'une console selon la présente invention;
[Fig. 4] La figure 4 est une vue en perspective de dessous d'un plateau mobile associé à un logement de stockage d'une console selon l'invention;
[Fig. 5] La figure 5 est une vue de côté d'un dispositif de maintien d'un dispositif électronique portatif pouvant être intégré sur un plateau mobile selon l'invention.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, dans la suite de la description, les termes relatifs du type "horizontal" ou "vertical" sont entendus par référence au sens commun que leur donnerait un passager assis sur un siège auquel est associée la console selon l'invention.

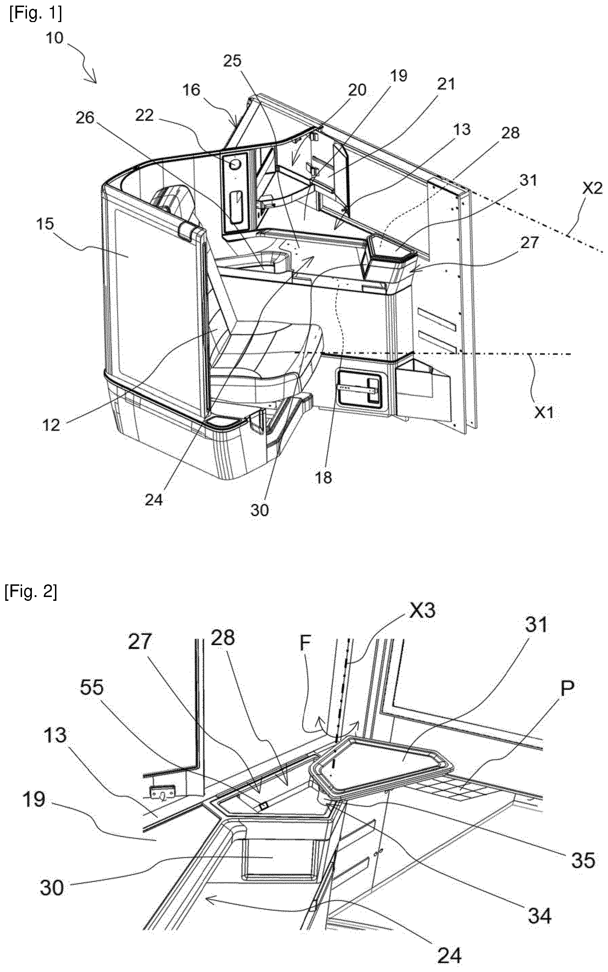

La figure 1 montre une unité de siège 10 comportant un siège 12 associé à une console latérale 13 s'étendant suivant un côté du siège 12. En outre, une coque 15 s'étend au moins en partie autour du siège 12 de manière à délimiter un espace semi-clos autour du passager. Une telle configuration permet de garantir l'intimité du passager assis sur le siège 12. Un écran vidéo 16 d'un système multimédia ou IFE (pour "Inflight Entertainment System" en anglais) pourra être implanté sur une partie arrière de la coque d'intimité 15 de façon à être utilisable par un passager arrière.

L'unité de siège 10 pourra également comporter classiquement une tablette repas 18 mobile entre une position stockée (correspondant à celle représentée sur la figure 1) dans laquelle la tablette repas 18 se trouve à l'intérieur d'un logement ménagé dans la console 13 et une position déployée dans laquelle la tablette repas 18 se situe à l'extérieur du logement.

Le siège 12 est avantageusement pourvu d'une cinématique lui permettant d'être mobile entre une position "assise", dans laquelle le siège 12 est configuré pour définir une position assise d'un passager, et une position "allongée", dans laquelle le siège 12 est configuré pour définir une surface de couchage du passager, avantageusement sensiblement horizontale. Des positions intermédiaires de confort sont aussi proposées, telles que la position "relax" dans laquelle un dossier du siège est fortement incliné.

Le siège 12 comporte un axe d'extension X1 défini par l'intersection entre un plan horizontal et un plan médian vertical du siège 12 correspondant à un plan de symétrie du siège 12. L'axe d'extension X1 du siège 12 pourra former un angle non nul par rapport à une direction parallèle ou confondu avec un axe central X2 de l'avion. En l'occurrence, le siège 12 est tourné en direction de l'axe X2. En variante, le siège 12 pourra être tourné dans une direction opposée à l'axe X2.

Dans l'exemple représenté, la console 13 comporte une paroi supérieure 19 d'orientation horizontale. La paroi supérieure 19 forme une surface de table sur laquelle un passager peut poser des objets. Du côté de son extrémité arrière, on pourra prévoir un espace de stockage vertical 20 comportant un ou plusieurs éléments parmi une pochette littérature, un porte-bouteille, ou un minibar. Le choix des rangements est configurable en fonction du souhait de la compagnie aérienne. L'espace de stockage 20 est fermé par une porte 21 à charnière d'axe vertical. La console 13 pourra également comporter une liseuse 22 destinée à orienter un éclairage en direction du siège 12.

Par ailleurs, une cavité 24 est située sous la paroi supérieure 19. La cavité 24 est ouverte latéralement en direction du siège 12 auquel est associée la console 13.

En outre, une face horizontale 25 de la console 13 a notamment une fonction d'accoudoir. La face horizontale 25 pourra présenter localement une forme de manchette 26 incurvée épousant la forme d'une partie du bras du passager. La paroi supérieure 19 présente un décrochement ménagé dans un bord latéral pour permettre au passager d'accéder aisément à la forme de manchette 26.

Par ailleurs, la console 13 comporte un logement de stockage 27 délimitant un volume interne à l'intérieur duquel le passager pourra poser des objets, notamment des objets de valeur, tels que des bijoux ou une montre.

Le logement de stockage 27 est muni d'une ouverture 28 débouchant vers l'extérieur dudit logement de stockage 27 suivant une direction verticale. Le logement de stockage 27 s'étend verticalement entre d'une part l'accoudoir 25 et d'autre part la paroi supérieure 19 formant une surface de table.

En l'occurrence, le logement de stockage 27 est disposé en partie avant de la console 13. Dans sa partie arrière, le logement de stockage 27 est délimité par une paroi portant une unité de contrôle 30 du siège 12 et de son environnement (dite "PCU" pour "Passenger Control Unit" en anglais). L'unité de contrôle 30 permet notamment au passager de commander la sélection d'une position du siège 12 ainsi que l'environnement du siège 12 à savoir un système vidéo, un dispositif de chauffage, une ambiance lumineuse, ou tout autre paramètre de l'environnement du siège 12.

Un plateau 31 est mobile entre une position de fermeture dans laquelle le plateau mobile 31 ferme l'ouverture 28 du logement de stockage 27 tel que montré sur la figure 1 et une position d'ouverture dans laquelle ledit plateau mobile 31 est dégagé de l'ouverture 28 du logement de stockage 27 pour permettre d'accéder au volume interne dudit logement de stockage 27, tel que montré sur la figure 2. En position de fermeture, le plateau mobile 31 n'interfère pas avec le volume interne du logement de stockage 27.

Le plateau mobile 31 pourra être réalisé à partir d'une plaque réalisée dans un matériau plastique ou dans un matériau métallique peint, notamment un matériau aluminium. Le plateau mobile 31 s'étend dans un plan horizontal P dans la position de fermeture et dans la position d'ouverture 28. Le plateau mobile 31 est apte à être maintenu dans ledit plan horizontal P lors d'un déplacement dudit plateau mobile 31 de la position de fermeture à la position d'ouverture et inversement.

Dans la position de fermeture et dans la position d'ouverture, le plateau mobile 31 se situe dans un même plan horizontal P que la paroi supérieure 19 formant la surface de table. Dans la position de fermeture, le plateau mobile 31 se situe dans un prolongement de la paroi supérieure 19, c'est-à-dire qu'il existe une continuité de surface entre le plateau mobile 31 et la paroi supérieure 19.

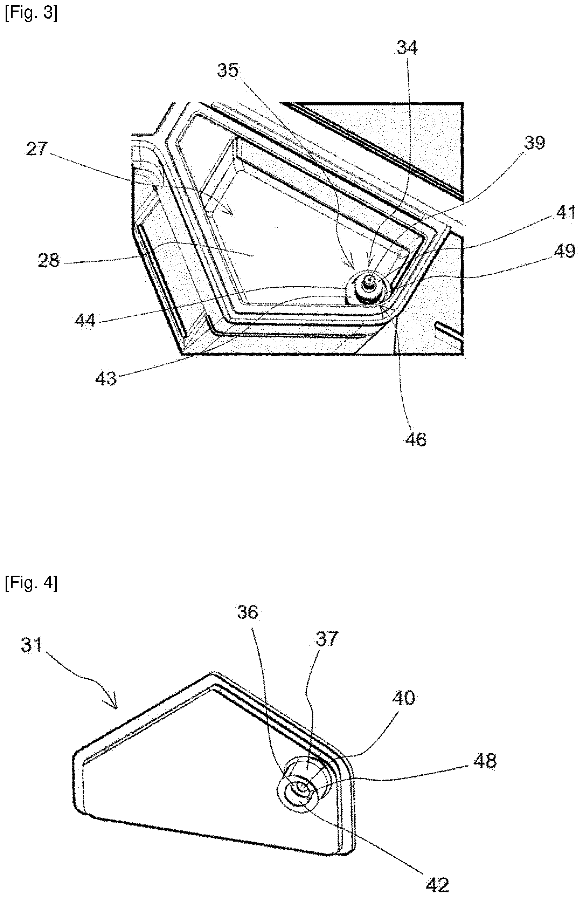

Le plateau 31 est mobile en rotation d'une position à une autre suivant la flèche F par l'intermédiaire d'une liaison pivot 34 d'axe vertical X3. Comme on peut le voir sur la figure 3, la liaison pivot 34 est formée par une tige verticale 35 munie d'une extrémité coopérant avec une cavité 36 de forme correspondante réalisée dans une portion cylindrique 37 solidaire du plateau 31 (cf. figure 4).

En l'occurrence, la tige 35 est issue d'un fond du logement de stockage 27. La tige 35 présente de préférence un diamètre étagé. La tige 35 comporte ainsi un tronçon d'extrémité 39 de petit diamètre destiné à venir s'insérer à l'intérieur d'un espace 40 de la cavité 36 de diamètre correspondant. Un tronçon 41 de diamètre intermédiaire est destiné à venir s'insérer à l'intérieur d'un espace 42 de la cavité 36 de diamètre correspondant. La tige 35 comporte également un tronçon 43 de grand diamètre (par rapport aux deux autres tronçons 39 et 41). Une différence de diamètre entre le tronçon 41 de diamètre intermédiaire et le tronçon 43 de grand diamètre forme un épaulement 44.

En outre, on prévoit de préférence un dispositif 46 de limitation d'un déplacement angulaire du plateau mobile 31. Le dispositif 46 de limitation d'un déplacement angulaire du plateau mobile 31 comporte un ergot 48 lié mécaniquement au plateau 31 coopérant avec une rainure 49 en forme d'arc de cercle ménagée dans l'épaulement de la tige 35, de sorte qu'au moins une extrémité de la rainure 49 constitue une butée de déplacement pour l'ergot 48 de façon à limiter un déplacement angulaire du plateau 31 lors de son passage de la position de fermeture à la position d'ouverture. En l'occurrence, l'ergot 48 est issu d'une face d'extrémité de la portion cylindrique 37.

En variante, le plateau mobile 31 pourra se déplacer suivant un mouvement de translation pour passer d'une position à une autre. En variante, le plateau 31 pourra se déplacer suivant un mouvement combiné de rotation et de translation pour passer d'une position à une autre. En variante, le plateau mobile 31 pourra être monté sur un bras télescopique.

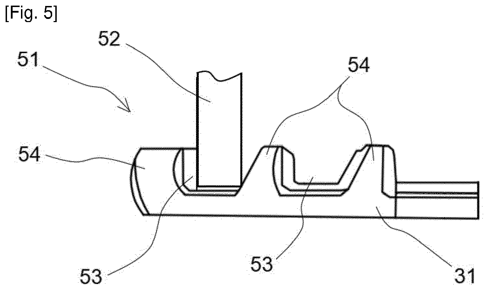

Le plateau mobile 31 pourra également comporter un dispositif de maintien 51 d'un dispositif électronique portatif 52, tel qu'une tablette numérique ou un téléphone mobile de type smartphone. Comme cela est illustré par la figure 5, le dispositif de maintien 51 comporte au moins une gorge 53 destinée à recevoir un bord du dispositif électronique portatif 52. La gorge 53 pourra par exemple être définie par deux dents 54 adjacentes s'étendant en saillie par rapport à une face supérieure du plateau mobile 31.

En variante, le plateau mobile 31 pourra comporter des pattes de maintien destinées à être disposées de part et d'autre du dispositif électronique portatif 52 suivant son épaisseur. En variante, le dispositif de maintien 51 pourra également comporter des mâchoires aptes à enserrer le dispositif électronique portatif 52 par ses bords latéraux.

Afin d'obtenir un effet esthétique notamment lorsque la cabine d'avion se trouve en mode nuit, la console 13 comporte au moins une source lumineuse 55 visible en figure 2, telle qu'une lampe ou un guide de lumière, assurant un éclairage du volume interne du logement de stockage 27. Les parois internes du logement de stockage 27 pourront être recouvertes d'un matériau doux du type daim ou cuir afin de conférer une bonne qualité de finition au logement de stockage 27 qui pourra être utilisé par le passager pour y disposer des objets précieux de type bijoux ou montre.

Dans l'exemple représenté, le plateau mobile 31 ainsi que le logement de stockage 27 présentent une forme pentagonale. En variante, le plateau 31 ainsi que le logement de stockage 27 pourront présenter toute autre forme adaptée à la configuration de la console 13, notamment une forme ronde, carrée, triangulaire, rectangulaire, hexagonale, toute autre forme polygonale ou arrondie.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. englobe diverses modifications que l'homme du métier pourra envisager, pour autant qu'elles restent dans le cadre des revendications annexées.

## Revendications

1. Unité de siège comprenant une console (13), ladite console (13) comportant :
- un accoudoir, et
- une paroi supérieure, et
- un logement de stockage (27) délimitant un volume interne à l'intérieur duquel peuvent être posés des objets,
- le logement de stockage (27) comportant une ouverture (28) débouchant vers l'extérieur dudit logement de stockage (27) suivant une direction verticale, et
- un plateau mobile (31) mobile entre une position de fermeture dans laquelle le plateau mobile (31) ferme l'ouverture (28) du logement de stockage (27) et une position d'ouverture dans laquelle ledit plateau mobile (31) est dégagé de l'ouverture (28) du logement de stockage (27) pour permettre d'accéder au volume interne dudit logement de stockage (27),
- ledit plateau mobile (31) s'étendant dans un plan horizontal (P) dans la position de fermeture et dans la position d'ouverture (28), ledit plateau mobile (31) étant apte à être maintenu dans ledit plan horizontal (P) lors d'un déplacement dudit plateau mobile (31) de la position de fermeture à la position d'ouverture et inversement,
**caractérisée en ce que** le logement de stockage (27) s'étend verticalement entre l'accoudoir (25) et la paroi supérieure (19) formant une surface de table.

2. Unité de siège selon la revendication 1, **caractérisée en ce que**, dans la position de fermeture et dans la position d'ouverture, le plateau mobile (31) se situe dans un même plan horizontal (P) que la paroi supérieure (19) formant la surface de table.

3. Unité de siège selon la revendication 1 ou 2, **caractérisée en ce que**, dans la position de fermeture, le plateau mobile (31) se situe dans un prolongement de la paroi supérieure (19) formant la surface de table.

4. Unité de siège selon l'une quelconque des revendications 1 à 3, **caractérisée en ce que** le plateau mobile (31) est mobile en rotation d'une position à une autre par l'intermédiaire d'une liaison pivot (34) d'axe vertical (X3).

5. Unité de siège selon la revendication 4, **caractérisée en ce que** la liaison pivot (34) est formée par une tige verticale (35) coopérant avec une cavité (36) de forme correspondante réalisée dans une portion cylindrique (37) solidaire du plateau mobile (31).

6. Unité de siège selon la revendication 5, **caractérisée en ce qu'**elle comporte un dispositif (46) de limitation d'un déplacement angulaire du plateau mobile (31).

7. Unité de siège selon la revendication 6, **caractérisée en ce que** le dispositif (46) de limitation d'un déplacement angulaire du plateau mobile (31) comporte un ergot (48) lié mécaniquement au plateau mobile (31) coopérant avec une rainure (49) en forme d'arc de cercle ménagée dans un épaulement de la tige (35) de sorte qu'au moins une extrémité de la rainure (49) constitue une butée de déplacement pour l'ergot (48) de façon à limiter un déplacement angulaire du plateau mobile (31) lors de son passage de la position de fermeture à la position d'ouverture.

8. Unité de siège selon l'une quelconque des revendications 1 à 7, **caractérisée en ce qu'**elle comporte au moins une source lumineuse (55) apte à assurer un éclairage du volume interne du logement de stockage (27).

9. Unité de siège selon l'une quelconque des revendications 1 à 8, **caractérisée en ce que** le plateau mobile (31) comporte un dispositif de maintien (51) d'un dispositif électronique portatif (52).

10. Unité de siège (10) selon l'une quelconque des revendications 1 à 9, **caractérisée en ce qu'**elle comporte en outre un siège (12).

## Patentansprüche

1. Sitzeinheit mit einer Konsole (13), wobei die Konsole (13) umfasst:
- eine Armlehne und
- eine obere Wand und
- eine Ablageaufnahme (27) zum Begrenzen eines Innenvolumens, in dem Objekte abgelegt werden können,
- wobei die Ablageaufnahme (27) eine Öffnung (28) zur Außenseite der Ablageaufnahmes (27) hin in vertikaler Richtung aufweist, und
- eine bewegliche Platte (31), die sich zwischen einer geschlossenen Stellung, in der die bewegliche Platte (31) die Öffnung (28) der Ablageaufnahme (27) verschließt, und einer offenen Stellung, in der die bewegliche Platte (31) in Abstand von der Öffnung (28) der Ablageaufnahme (27) zum Zugang zum Innenvolumen der Ablageaufnahme (27) steht, bewegen kann,
- wobei in der Schließstellung und in der Öffnungsstellung (28) sich die bewegliche Platte (31) in einer horizontalen Ebene (P) erstreckt, wobei die bewegliche Platte (31) bei einer Bewegung der beweglichen Platte (31) von der Schließstellung in die Öffnungsstellung und umgekehrt in der horizontalen Ebene (P) gehalten werden kann,
**dadurch gekennzeichnet, dass** sich die Ablageaufnahme (27) vertikal zwischen der Armlehne (25) und der eine Tischfläche bildenden oberen Wand (19) erstreckt.

2. Sitzeinheit nach Anspruch 1, **dadurch gekennzeichnet, dass** in der Schließstellung und in der Öffnungsstellung sich die bewegliche Platte (31) in der gleichen horizontalen Ebene (P) wie die die Tischfläche bildende obere Wand (19) steht.

3. Sitzeinheit nach Anspruch 1 oder 2, **dadurch gekennzeichnet, dass** in der Schließstellung sich die bewegliche Platte (31) in einer Verlängerung der die Tischfläche bildenden oberen Wand (19) steht.

4. Sitzeinheit nach einem der Ansprüche 1 bis 3, **dadurch gekennzeichnet, dass** die bewegliche Platte (31) mittels einer Schwenkverbindung (34) mit vertikaler Achse (X3) drehbar von einer Position in eine andere bewegt werden kann.

5. Sitzeinheit nach Anspruch 4, **dadurch gekennzeichnet, dass** die Schwenkverbindung (34) durch eine vertikale Stange (35) gebildet ist, die mit einer Aushöhlung (36) entsprechender Form zusammenwirkt, die in einem zylindrischen Abschnitt (37) ausgebildet ist, der fest mit der beweglichen Platte (31) verbunden ist.

6. Sitzeinheit nach Anspruch 5, **dadurch gekennzeichnet, dass** sie eine Begrenzungsvorrichtung (46) für eine Winkelbewegung der beweglichen Platte (31) umfasst.

7. Sitzeinheit nach Anspruch 6, **dadurch gekennzeichnet, dass** die Begrenzungsvorrichtung (46) für eine Winkelbewegung der beweglichen Platte (31) eine Nase (48) umfasst, die mechanisch mit der beweglichen Platte (31) verbunden ist und mit einer kreisbogenförmigen Nut (49) zusammenwirkt, die in einer Schulter der Stange (35) ausgebildet ist, so dass zumindest ein Ende der Nut (49) einen Bewegungsanschlag für die Nase (48) bildet, um eine Winkelbewegung der beweglichen Platte (31) beim Übergang derselben von der geschlossenen Position in die offene Position zu begrenzen.

8. Sitzeinheit nach einem der Ansprüche 1 bis 7, **dadurch gekennzeichnet, dass** sie mindestens eine Lichtquelle (55) zum Beleuchten des Innenraums im Ablageaufnahme (27) bereitzustellen umfasst.

9. Esseinheit nach einem der Ansprüche 1 bis 8, **dadurch gekennzeichnet, dass** die bewegliche Platte (31) eine Haltevorrichtung (51) für eine tragbare elektronische Vorrichtung (52) aufweist.

10. Sitzeinheit (10) nach einem der Ansprüche 1 bis 9, **dadurch gekennzeichnet, dass** sie außerdem einen Sitz (12) umfasst.

## Claims

1. A seat unit comprising a console (13), said console (13) comprising:
- an armrest, and
- an upper wall, and
- a storage housing (27) delimiting an internal volume inside which objects can be placed,
- the storage housing (27) comprising an opening (28) towards the outside of said storage housing (27) in a vertical direction, and
- a movable plate (31) capable of moving between a closed position in which the movable plate (31) closes the opening (28) of the storage housing (27) and an open position in which said movable plate (31) is spaced from the opening (28) of the storage housing (27) so as to access to the internal volume of said storage housing (27),
- said movable plate (31) extending in a horizontal plane (P) in the closed position and in the open position (28), said movable plate (31) being able to be maintained in said horizontal plane (P) during a movement of said movable plate (31) from the closed position to the open position and vice versa,
**characterized in that** the storage housing (27) extends vertically between the armrest (25) and the upper wall (19) forming a table surface.

2. The seat unit according to claim 1, **characterized in that**, in the closed position and in the open position, the movable plate (31) is located in the same horizontal plane (P) as the upper wall (19) forming the table surface.

3. The seat unit according to claim 1 or 2, **characterized in that**, in the closed position, the movable plate (31) is located in an extension of the upper wall (19) forming the table surface.

4. The seat unit according to any of the claims 1 to 3, **characterized in that** the movable plate (31) is able to move in rotation from one position to another by means of a pivot connection (34) with a vertical axis (X3).

5. The seat unit according to claim 4, **characterized in that** the pivot connection (34) is formed by a vertical rod (35) cooperating with a cavity (36) of corresponding shape made in a cylindrical portion (37) fixed to the movable plate (31) .

6. The seat unit according to claim 5, **characterized in that** it comprises a limitation device (46) for an angular movement of the movable plate (31).

7. The seat unit according to claim 6, **characterized in that** the limitation device (46) for an angular movement of the movable plate (31) comprises a toe (48) mechanically linked to the movable plate (31) and cooperating with a groove (49) having the shape of a circular arc formed in a shoulder of the rod (35) so that at least one end of the groove (49) forms a movement stop for the toe (48) so as to limit an angular movement of the movable plate (31) during the passage thereof from the closed position to the open position.

8. The seat unit according to any of the claims 1 to 7, **characterized in that** it comprises at least one light source (55) capable of providing lighting of the internal volume in the storage housing (27).

9. The eat unit according to any of the claims 1 to 8, **characterized in that** the movable plate (31) comprises a holding device (51) for a portable electronic device (52).

10. The seat unit (10) according to any of the claims 1 to 9, **characterized in that** it further comprises a seat (12).
